# FASCICULE DE BREVET EUROPEEN

(11) **EP 0 445 034 B1**
(45) Date de publication et mention de la délivrance du brevet: **02.05.1997**
(21) Numéro de dépôt: 91400541.8
(22) Date de dépôt: 27.02.1991
(51) Int. Cl.: G06F 11/22

(54) **Dispositif et utilisation de ce dispositif dans un procédé de remplacement de cartes**
Vorrichtung und Benutzung dieser Vorrichtung in einem Verfahren zum Karten-Auswechseln
System and use of this system in a card replacement process

(30) Priorité: 28.02.1990 FR 9002517
(43) Date de publication de la demande: 04.09.1991
(73) Titulaire: BULL S.A., 92800 Puteaux (FR)
(72) Inventeur: Bonnafoux, Jean-François, F-60260 Lamorlaye (FR)
(74) Mandataire: Colombe, Michel

(56) Documents cités:
- EP-A- 0 031 782
- EP-A- 0 348 293
- ICL TECHNICAL JOURNAL, vol. 6, no. 1, mai 1988, Oxford, GB, pp. 2-16; R. ALLISON: "ICL Series 39 Support Process"
- HEWLETT-PACKARD JOURNAL, vol. 38, no. 3, mars 1987, Palo Alto, US, pp. 21-28; G.F. BUCHANAN et al.: "A Distributed Terminal Controller for HP Precision Architecture Computers Running the MPE XL Operating System"
- IEEE SPECTRUM, vol. 21, no. 2, février 1984, New York, US, pp. 36-42; T.-S. LIU: "Maintenance processors for mainframe computers"
- IEEE TRANSACTIONS ON NUCLEAR SCIENCE, vol. 36, no. 1, février 1989, New York, US, pp. 756-759; R.C. AGOSTINI et al.: "PASHA - An approach to computer-aided hardware debugging"
- ELECTRONIQUE INDUSTRIELLE no. 54, juin 1983, Paris, FR, pp. 43-47; G. QUERO: "L'automatisation de la maintenance électronique "

## Description

La présente invention concerne un dispositif et l'utilisation de ce dispositif dans un procédé de remplacement de cartes.
Il est connu par exemple par la demande de brevet Européen 0 031 782 un dispositif comportant un processeur de service relié par un réseau et une unité de maintenance des canaux reliée à un système central, ledit processeur de service étant relié par un commutateur de console de service à une console éloignée de service.

Par ailleurs, il est également connu dans les systèmes d'effectuer de la télémaintenance ou du téléchargement de programme, à partir d'unités éloignées.

En général, cette télémaintenance ou ces programmes opérés à distance s'effectuent avec des moyens présentant une ergonomie peu sophistiquée et nécessitant, de la part de l'opérateur, des connaissances spécifiques au système.

Un premier but de l'invention est donc de proposer un dispositif permettant une utilisation d'un processeur de service d'un système central avec une bonne ergonomie, cette utilisation se faisant éventuellement à distance.

Ce but est atteint par le fait que le dispositif permet de piloter une application à distance, comportant un premier processeur de service relié par un réseau et une unité de maintenance des canaux reliée à un système central, ledit processeur de service étant relié par un commutateur de console de service, à une console de service de maintenance RMS, et à une console éloignée de service RSC, est caractérisée en ce que le processeur de service et chaque console comportent en plus des programmes de système d'exploitation, un programme superviseur et au moins un service décomposé en deux applications, l'une "corps" composée de l'algorithme du programme, l'autre "présentation" comportant l'interface avec l'opérateur permettant un affichage du type à fenêtres avec une barre de menu, le programme corps de l'application comporte un module bibliothèque d'échange de messages (171) lié au programme corps de l'application et contenant des primitives destinées à émettre ou à recevoir des messages et le programme présentation de l'application comporte des fenêtres générées en fonction de l'application et stockées dans une mémoire, et un module bibliothèque d'échange de messages (183) lié au programme présentation de l'application et contenant des primitives destinées à recevoir ou à émettre des messages, les messages reçus par le module bibliothèque d'échange de messages lié au programme présentation contiennent l'adresse du bloc mémoire dans laquelle le message est stocké et les messages émis contiennent chacun l'adresse du bloc mémoire du programme corps contenant la commande correspondant à la réponse fournie par l'opérateur au message reçu, les messages émis par le module bibliothèque d'échange de messages lié au programme corps de l'application contiennent chacun l'adresse du bloc mémoire contenant le message, et les messages reçus contiennent chacun l'adresse du bloc mémoire du programme corps dans laquelle la réponse fournie par l'opérateur est stockée.

Une caractéristique supplémentaire de l'invention est de permettre l'utilisation du processeur de réserve pour présenter un service qui est exécuté par le processeur tenant.

selon cette caractéristique le processeur de service de réserve comporte des moyens de faire tourner l'application présentation correspondant à un service, et des moyens de communiquer avec le processeur de service tenant comportant les moyens de faire tourner en même temps l'application tronc d'un service, dont la présentation est faite sur le processeur de réserve, et l'application tronc, ainsi que la présentation d'un deuxième service dont la présentation, est faite sur lui-même.

Selon une autre caractéristique, chaque processeur de service ou console comporte un programme superviseur gérant les numéros d'instance des services, et assurant le démarrage des services.

Selon une autre caractéristique, chaque processeur de service comporte des moyens de traitement des communications avec l'autre processeur de service.

Selon une autre caractéristique, chaque console comporte des moyens de traitement des communications par le commutateur de console de service avec l'un des processeurs de service.

Un autre but de l'invention est de proposer une utilisation du dispositif précédent dans un procédé de remplacement de cartes dans le dispositif, comportant un premier processeur de service relié par un réseau et une unité de maintenance des canaux reliée à un système central, ledit processeur de service étant relié par un commutateur de console de service, à une console de service de maintenance RMS, et à une console éloignée de service RSC, chaque processeur de service et chaque console comportant en plus des programmes de système d'exploitation, un programme superviseur et au moins un service décomposé en deux applications, l'une "corps" composée de l'algorithme du programme, l'autre "présentation" comportant l'interface avec l'opérateur permettant un affichage du type à fenêtres avec une barre de menu, le programme corps de l'application comportant un module bibliothèque d'échange de messages lié au programme corps de l'application et contenant des primitives destinées à émettre ou à recevoir des messages et le programme présentation de l'application comportant des fenêtres générées en fonction de l'application et stockées dans une mémoire, et un module bibliothèque d'échange de messages lié au programme présentation de l'application et contenant des primitives destinées à recevoir ou à émettre des messages , les messages reçus par le module bibliothèque d'échange de message(183) lié au programme présentation contenant chacun l'adresse du bloc mémoire dans laquelle le message est stocké et les messages émis contenant chacun l'adresse du bloc mémoire du programme corps qui contient la commande correspondant à la réponse fournie par l'opérateur au message reçu, les messages émis par le module bibliothèque d'échange de message (173) lié au programme corps de l'application contenant chacun l'adresse du bloc mémoire qui contient le message, et les messages reçus contenant chacun l'adresse du bloc mémoire du programme corps dans laquelle la réponse fournie par l'opérateur est stockée, le service de remplacement de cartes comportant une application de présentation consistant à afficher dans une boîte de dialogue l'identité d'un groupe d'éléments à sélectionner;
à sélectionner l'identité du groupe d'éléments en validant, par la souris ou le clavier, l'identité ; à sélectionner dans le groupe un des éléments en amenant une surbrillance sur cet élément ;
à valider la sélection en cliquant avec la souris le pavé contenant le message "OK".

Selon une autre caractéristique, l'application de la présentation consiste en outre à afficher dans une boîte de dialogue un message indiquant que l'emplacement est occupé, et que le système va essayer de copier son contenu, et une question demandant la confirmation ou l'arrêt du service et à sélectionner la confirmation ou l'arrêt du service, en venant cliquer le pavé correspondant.

Selon une autre particularité, le procédé consiste à afficher dans une boîte de dialogue le groupe d'éléments dans lequel on va sélectionner un deuxième élément en amenant une surbrillance sur cet élément ;
à valider la sélection en cliquant le pavé contenant le message "OK".

Selon une autre particularité, le procédé consiste à demander confirmation de la demande d'insertion d'une nouvelle carte ;
à indiquer dans une boîte de dialogue que l'opérateur peut effectuer le changement, et après celui-ci à demander la confirmation ou l'infirmation ;
à confirmer ou à infirmer l'emplacement en venant cliquer un emplacement indiquant que le second emplacement est plein, respectivement vide.

Selon une autre particularité, le procédé de l'application présentation consiste à afficher dans une boîte de dialogue l'exécution du test sur la carte mise en place ;
à afficher la réussite de la copie des informations contenues dans le premier élément ;
et un message d'autorisation de retrait de la carte du premier emplacement ;
à demander à l'opérateur, la confirmation ou l'infirmation du retrait en venant cliquer une zone indiquant que le premier emplacement est vide, respectivement occupé.

Selon une autre caractéristique de l'invention le programme de présentation a été développé à partir d'un jeu de quatre composants constitués:
d'un élément noyau qui assure le traitement des tâches ,les allocations mémoires la fonction timer et les liens dynamiques;
d'un composant utilisateur qui assure le traitement des fenêtres et leur création;
d'un troisième composant pour réaliser les fonctions graphiques et les dessins;
d'un quatrième composant qui assure les fonctions de communications synchrones.

Un autre but de l'invention est de proposer un procédé d'utilisation sur un dispositif de traitement d'information d'un programme divisé en deux applications.

Ce but est atteint par le fait que le procédé d'utilisation sur un dispositif de traitement d'information comportant au moins un processeur constituant l'unité de traitement exécutant l'algorithme d'un programme d'application et une console, le procédé étant caractérisé en ce que ledit programme d'application est divisé en deux applications, une première application appelée « corps » comportant l'algorithme du programme l'autre application appelée « présentation » comportant l'interface avec l'utilisateur, ladite interface permettant un affichage de type « window » avec une barre de menu ,le programme de présentation et le programme corps comportant chacun un module bibliothèque d'échange de message, le procédé comportant les étapes suivantes:
stockage du message envoyé par le programme corps dans une mémoire tampon de l'unité de traitement assignée au programme corps et envoi d'un message dynamique d'échange de données à destination du programme de présentation, ledit message dynamique d'échange de données contenant l'adresse du bloc mémoire qui contient le message envoyé par le programme corps;
réception du message dynamique d'échange de données par le programme présentation et lecture du message stocké à l'adresse indiquée dans le message dynamique d'échange de données;
traitement du message et affichage du message à l'utilisateur, la réception de la réponse étant traitée par une primitive du module de bibliothèque de message d'échange du programme présentation;
envoi au programme corps d'un message dynamique accusant la réception du message et envoi d'un second message contenant l'adresse à laquelle la réponse donnée par l'utilisateur a été stockée pour permettre aux primitives de transmission de message et de réception du programme corps d'effectuer le traitement de la réponse par lecture de la réponse contenue à l'adresse indiquée par le message.

Selon une autre caractéristique le procédé d'utilisation sur un dispositif de traitement d'information comportant au moins un processeur constituant l'unité de traitement exécutant l'algorithme d'un programme d'application et une console, le procédé étant caractérisé en ce que ledit programme d'application est divisé en deux applications, une première application appelée « corps » comportant l'algorithme du programme l'autre application appelée « présentation » comportant l'interface avec l'utilisateur, ladite interface permettant un affichage de type « window » avec une barre de menu ,le programme de présentation et le programme corps comportant chacun un module bibliothèque d'échange de message, le procédé comportant les étapes suivantes:
stockage du message envoyé par le programme corps dans une mémoire tampon de l'unité de traitement assignée au programme corps et envoi d'un message dynamique d'échange de données au programme de présentation , ledit message dynamique d'échange de données contenant l'adresse du bloc mémoire qui contient le message envoyé par le programme corps;
réception du message dynamique d'échange de données par le programme présentation et lecture du message stocké à l'adresse indiquée dans le message dynamique d'échange de données;
traitement du message par utilisation des composants du dispositif permettant l'exécution de l'affichage demandé, en cherchant à l'adresse les données correspondant à 1' affichage à effectuer;
activation après le traitement du message d'une primitive pour envoyer au corps de l'application un accusé de réception

D'autres caractéristiques et avantages apparaîtront à la lecture de la description ci-après faite en référence aux dessins annexés, dans lesquels :
- la figure 1 représente un schéma d'ensemble du système;
- la figure 2 représente les moyens matériels et de logiciel mettant en communication certaines parties du système ;
- la figure 3 représente le principe du dispositif de l'invention ;
- la figure 4 représente le schéma d'utilisation du principe de l'invention dans une communication entre un processeur de service et des stations éloignées ;
- la figure 5 représente le schéma de principe d'utilisation de l'invention dans le cas d'un processeur de service et d'une seule station éloignée ;
- la figure 6 représente le schéma de principe d'utilisation de l'invention dans le cas d'un processeur de service tenant et d'un processeur de service de réserve ;
- la figure 7 représente les formats des textes de message ;
- la figure 8 représente l'organigramme synoptique du déroulement du programme de remplacement de carte formant le corps du programme ;
- les figures 9 à 16 représentent les différentes étapes du programme de présentation du remplacement d'une carte;
- la figure 17 représente un synoptique des échanges de messages entre le body/corps d'une application et la présentation de cette application dans le cas d'une présentation effectuée sur le même matériel pour un message question/réponse ;
- la figure 18 représente le schéma du synoptique des échanges effectués entre le corps d'une application et la présentation dans le cas d'un message non préfixé ne nécessitant aucune réponse ;
- la figure 19 représente les échanges effectués entre le corps d'une application et la présentation de l'application dans le cas d'une présentation mise en oeuvre à distance de l'application, pour des messages ne nécessitant pas de réponse.

La figure 20 représente une variante de représentation d'une des étapes du programme de présentation de remplacement d'une carte correspondant aux figures 9 ou 12.

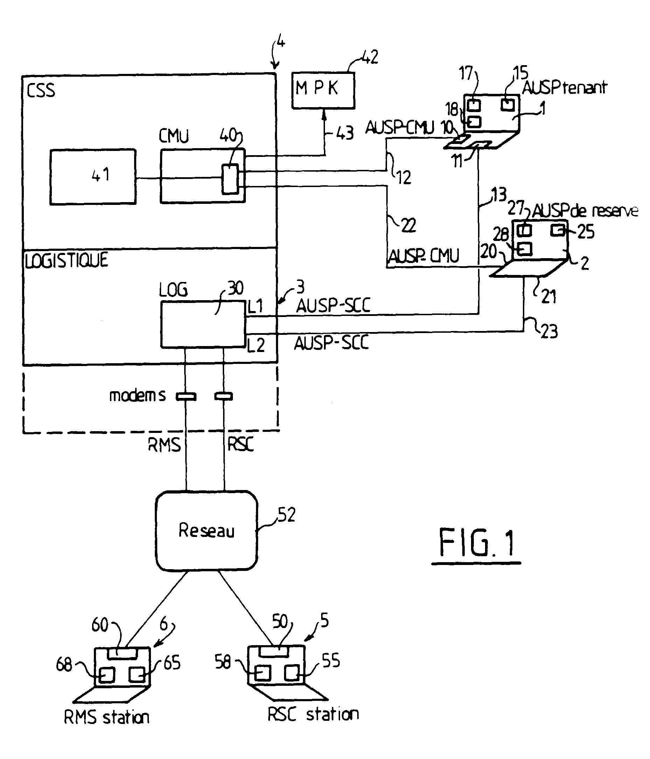

L'architecture du système est constituée, comme représenté à la figure 1, par un processeur de service tenant (1), relié par un logiciel d'interface (10) MSH (Maintenance Station Handler) avec une ligne de traitement de la maintenance des stations de télécommunication (12) formant un réseau de type STARLAN. Cette ligne (12) est reliée à une unité d'horloge et de maintenance (40) qui assure les communications entre le processeur de service (1), un deuxième processeur de service de réserve, par l'intermédiaire d'une deuxième ligne (22), et un système central (41). L'unité de maintenance et d'horloge (40) d'un sous système central (4) communique également par une ligne (43) avec un ensemble de processeurs de maintenance (42). Le processeur de service tenant (1) et le processeur de service de réserve (2) communiquent également par l'intermédiaire d'une interface de gestion de lignes éloigné (11) RLH (Remote Line Handler), et respectivement (21), avec un commutateur de console de service (3), qui permet par l'intermédiaire d'un circuit (30), et d'une matrice de commutation appropriée, de mettre en communication chacun des processeurs de service avec le réseau de télécommunication d'un pays donné, et à travers ce réseau avec une station (5) constituant une console de service éloignée communiquant avec ce réseau (52) par l'intermédiaire d'un logiciel d'interface RSC (50). De même, chacun des processeurs de service peut être mis en communication, à travers le réseau (52), avec une station de maintenance éloignée (6) communiquant avec le réseau (52) par un logiciel d'interface RMS (51). Les lignes (23) et (13) reliées au commutateur de console de service par les logiciels d'interface (21) et (11) ont des débits de 4.800 bauds, tandis que les lignes (12) et (22) formant le réseau STARLAN avec l'unité d'horloge et de maintenance (40) ont des débits de l'ordre du mégabit par seconde. Les processeurs de maintenance (42) sont reliés à des ensembles d'unités d'entrée-sortie pour le système central.

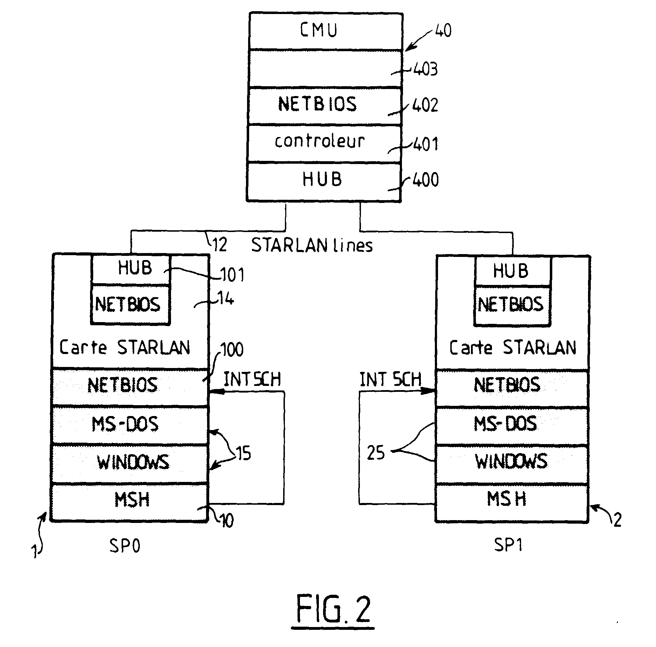

La figure 2 représente l'environnement logiciel permettant aux processeurs de service (1, 2) de communiquer par le réseau STARLAN avec l'unité de maintenance (40). Le processeur de service tenant comporte en plus du logiciel MSH (10) et d'un système d'exploitation comportant le système d'exploitation du disque MS-DOS, un logiciel multitâches à fenêtre tel que WINDOWS, et une partie de logiciel que l'on décrira ultérieurement. Le processeur de service tenant comporte également un logiciel de communication NETBIOS (100) communiquant à travers une carte de réseau type STARLAN (14) et un élément de hardware (101) constituant une passerelle, à travers la ligne (12) du réseau STARLAN, vers une deuxième passerelle (400), un circuit de gestion (401), un logiciel d'interface NETBIOS (402) et un logiciel d'interface avec le processeur de service (403). De façon similaire, le processeur de service de réserve (2) comportera également les mêmes éléments, mais avec le chiffre 2 comme référence pour le chiffre des dizaines ou des centaines. Chaque processeur de service comporte en plus dans son système d'exploitation (15, 25) un programme corps pour une application donnée (17, 27, fig. 1) et un programme présentation de l'application (18, 28, fig. 1). De même, les consoles éloignées (5, 6) peuvent être constituées, comme pour les processeurs de service, de micro-ordinateurs disposant en plus du clavier d'une souris, et d'un système d'exploitation (65, 55) constitué également comme pour les processeurs de service du système d'exploitation des disques MS-DOS, d'un logiciel multifenêtre WINDOWS, et d'un logiciel superviseur SPV, dont le rôle est de lancer les présentations dans la ou les consoles. Un module LPXMS permet de stocker dans les fichiers LOG et LOGM du disque dur respectivement les messages d'incidents et tous les dialogues de tous les services. Le superviseur du processeur de service tenant connaît également par RLH, l'état de connexion ou de déconnexion des consoles pour commander en conséquence le commutateur de console (30) et configurer les présentations, comme nous le verrons ultérieurement. De même, l'unité de maintenance et d'horloge permet de lancer le deuxième processeur de service en cas de défaillance du premier, et le superviseur SPV instaure dans ce dernier les mêmes applications. Ces stations éloignées (5, 6) comportent également des logiciels de présentation (58, 68) correspondant aux logiciels de présentation des programmes corps d'une application tournant sur un processeur de service (1), respectivement (2).

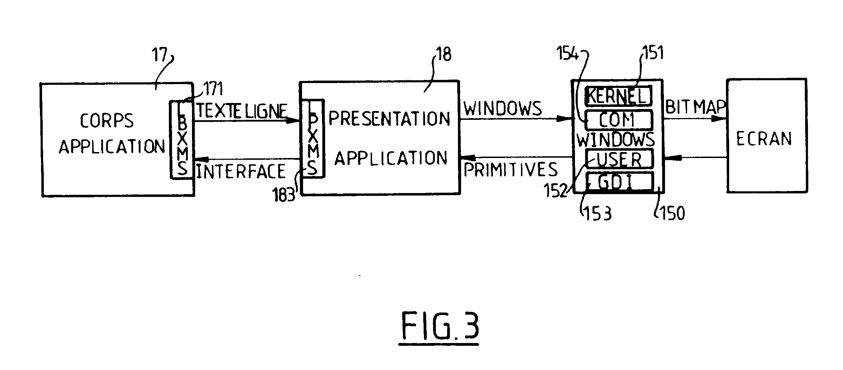

La figure 3 représente le principe de l'architecture nécessaire à la mise en oeuvre de l'invention dans laquelle le programme corps (17) d'une application donnée, tournant par exemple sur le processeur de service tenant, échange des lignes de texte et des messages d'acquittement ou de réponse avec le programme de présentation (18) de l'application. Ces échanges de messages et de lignes de texte se font par l'intermédiaire de modules de bibliothèque de gestion des messages LBXMS (171) et LPXMS (183) qui se trouvent liés respectivement au corps de l'application et à la présentation de l'application. Le programme de présentation de l'application échange avec le logiciel WINDOWS (150), les primitives nécessaires à la gestion des tâches et à l'affichage des fenêtres. L'application présentation aura été développée à l'aide du programme WINDOWS (150) qui peut être vu comme un jeu de quatre composants. Un premier composant noyau (Kernel) (151) assurant la gestion des tâches, les allocations de mémoire, la fonction TIMER et les liens dynamiques. Un deuxième élément (152) utilisateur (user) servant à assurer la gestion des fenêtres et la création de celles-ci. Un troisième élément GDI (153) permettant de réaliser les fonctions graphiques en vue d'effectuer des dessins, et un quatrième élément (154) COM assurant les fonctions de communication de manière asynchrone, par exemple au moyen d'un protocole DDE (échange dynamique de données) qui est un protocole d'échange de données entre applications et permet la communication entre applications.

La communication avec des lignes de texte permet de réduire la densité des informations par rapport à une communication constituée par un jeu de primitives WINDOWS, qui sont utilisées pour générer un écran, et par conséquent, accélère les échanges.

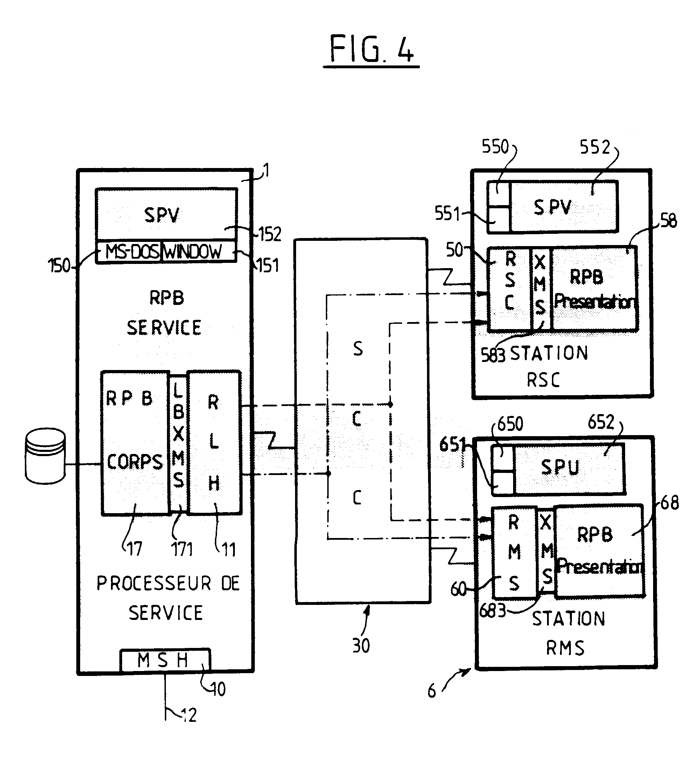

La figure 4 représente le fonctionnement de l'architecture dans le cas d'un processeur de service tenant (1) connecté par l'intermédiaire d'un commutateur de console de service (30) à la console de maintenance éloignée (6) et à la console de service éloignée (5) constituée par un micro-ordinateur. Ce micro-ordinateur, comme le processeur de service (1), comporte une souris et un système d'exploitation (550, 551, 552) constitué respectivement par le logiciel MS-DOS, WINDOWS et un superviseur SPV. Pour la station de maintenance, le système d'exploitation est constitué de la même façon par les éléments (650, 651, 652). Une interface RSC (50) assure l'interface entre les lignes de télécommunication et le micro-ordinateur (5), et à travers ces lignes de télécommunication, vers le processeur de service qui se trouve lui-même interfacé avec les lignes de communication par l'interface RLH (11). De même, la station de maintenance comporte une interface RMS (60) ayant les mêmes fonctions que l'interface RSC. Cette interface RSC communique par un module bibliothèque de messages (583) lié à la présentation de l'application (58) constituée par une application RPB de remplacement de carte (replace board). Le corps de l'application (17) de remplacement de carte tourne sur le processeur de service tenant et se trouve lié à une bibliothèque de messages permettant la communication avec l'interface RLH (11). Le commutateur de console de service (30) permet, grâce à une matrice de commutation et aux informations fournies par l'interface RLH du processeur tenant (1), d'acheminer directement les messages provenant du processeur de service vers les deux consoles, si ces deux consoles sont branchées, d'acheminer tous les messages émis par la console de service éloignée (5) vers le processeur de service (1) et la console de maintenance, si celle-ci est branchée, et d'acheminer tous les messages émis par la console de maintenance vers le processeur de service. Ceci est permis par le fait que RLH, au fur et à mesure des connexions des consoles, établit un dialogue avec l'interface RSC ou RMS respective, et notifie au programme superviseur (152) l'état de connexion ou de déconnexion des consoles du réseau. Cette table sert ensuite à établir les communications à travers le commutateur de console (30).

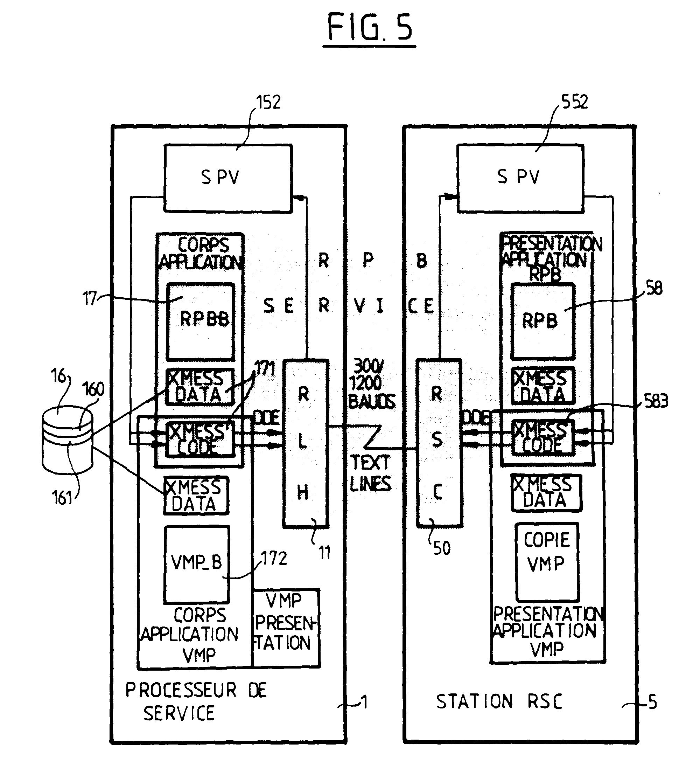

La figure 5 représente le fonctionnement de l'architecture décrite dans le cas où le processeur de service (1) est en communication avec une console éloignée (5). Cette console éloignée (5) servant à effectuer la présentation d'une application RPB (58), grâce au module de bibliothèque XMESS (583) et à l'interface RSC (50) qui communique par le réseau avec l'interface RLH (11) du processeur de service. Dans cette communication, le processeur de service exécute le programme corps de l'application (17), et le superviseur (152) stocke, sur un disque (16), dans un fichier LOG (160) et dans un fichier LOGM (161), respectivement les messages d'incidents et tous les dialogues de tous les services tournant dans le processeur de service.

L'interface RLH (11) voit les stations éloignées à travers le commutateur de console de service (30) et conduit seulement une ligne de communication de données reliant RLH et SCC. Les deux lignes de communication de données, liant le processeur de service avec les stations RMS et RSC, sont conduites par SCC.

Dans l'architecture de la figure 5, le processeur de service (1) peut, par exemple, exécuter une autre application appelée VMP, et grâce au programme de présentation de cette application VMP, présenter cette application sur son moniteur, tandis que la deuxième application RPB sera présentée sur le moniteur de la station RSC. En même temps, une copie de dialogue de l'application VMP sera disponible sur la station RSC.

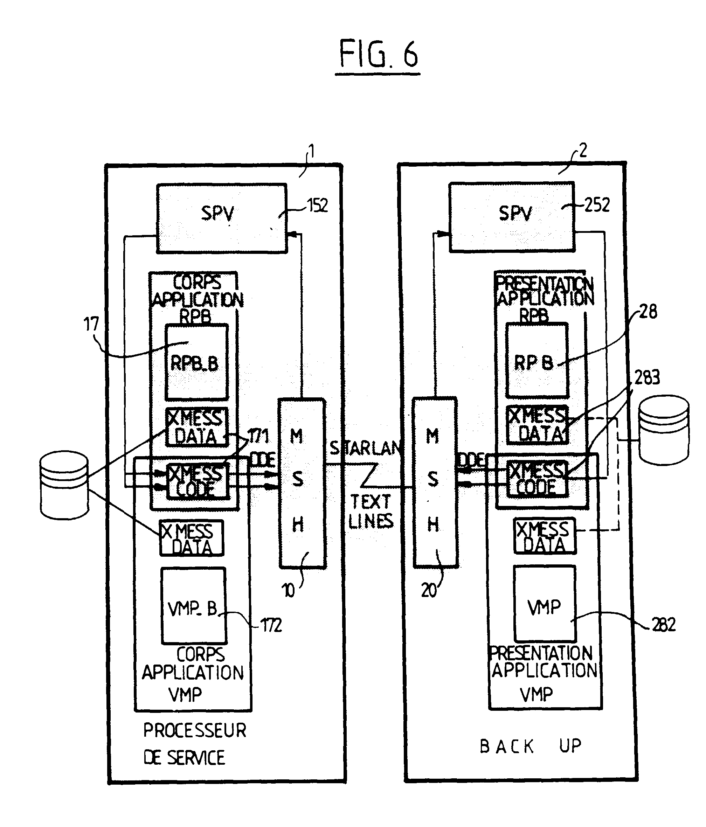

La figure 6 représente un autre avantage de l'architecture proposée qui permet, par exemple, d'utiliser le processeur de service de réserve (2) pour effectuer la présentation d'une application qui tourne sur le processeur de service tenant (1). Ceci présente l'avantage de permettre une utilisation du processeur de service de réserve qui, compte tenu de l'augmentation de la fiabilité des matériels, devient de moins en moins sollicité dans son rôle de processeur de service de réserve, et peut ainsi être utilisé comme console complémentaire de présentation d'une application.

Dans le cas de la figure 6, le processeur de service (2) exécute la présentation de l'application RPB (28), tandis que le corps de l'application RPB est exécuté par le processeur de service tenant (1). Les processeurs de service (1) et (2) communiquent entre eux par les interfaces MSH (10, 20) et le réseau STARLAN, comme représenté à la figure 2.

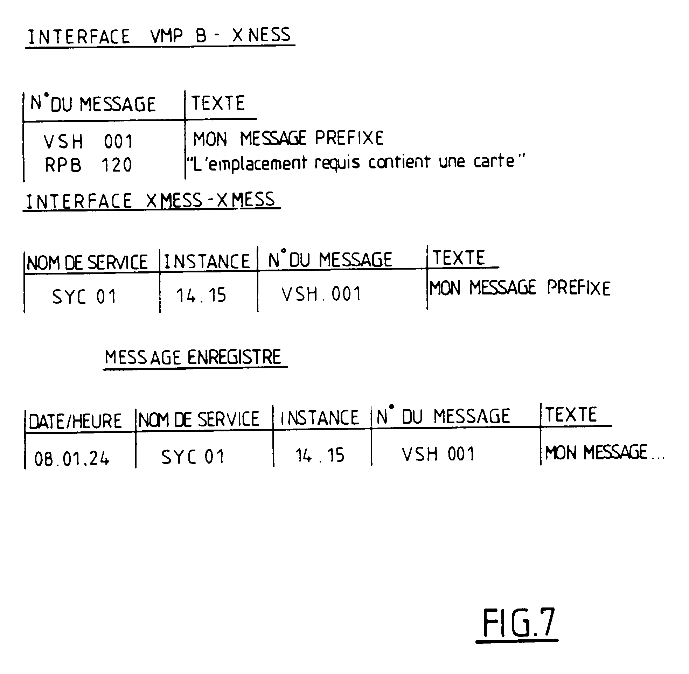

La figure 7 représente le format des messages. Le premier type de format correspond aux messages échangés entre le corps d'une application et le module bibliothèque XMESS. Dans ce cas là, le format est constitué d'un numéro de message qui peut être VSH 001, ou RPB 120 dans le cas de l'application de remplacement de carte, suivi du texte du message qui peut être "mon message préfixé", où dans le cas de l'application remplacement de carte, "l'emplacement requis contient une carte".

Lorsque les messages sont échangés entre les modules de bibliothèque XMESS de deux interfaces éloignés, le message est constitué du nom de service qui peut être SYC 01, de l'instance, suivi du numéro de message et du texte comme vu précédemment. Les messages archivés, représentés à la dernière ligne, font précéder le format du message d'interface XMESS de la date et de l'heure.

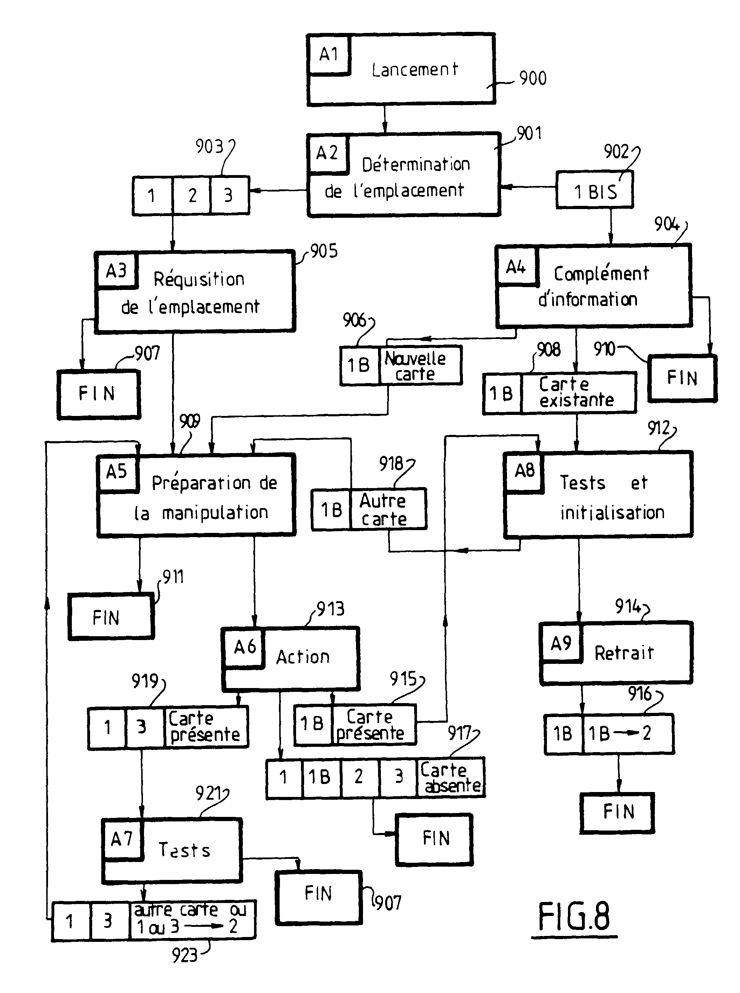

Les figures 8 à 16 représentent un exemple d'une application dont le corps et la présentation peuvent être séparés selon le principe de l'invention.

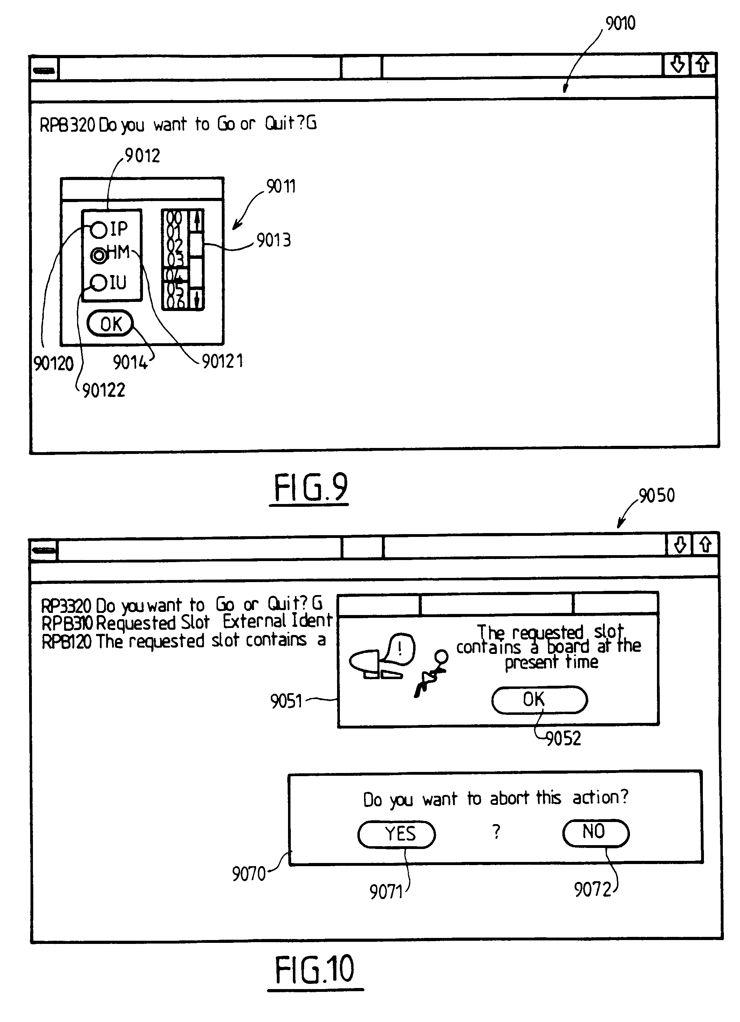

L'algorithme du déroulement du programme corps est représenté par la figure 8, tandis que les figures 10 à 15 représentent les résultats produits par l'exécution de l'application présentation.

La génération des différentes fenêtres correspondant aux figures 9 à 16, formant une partie de l'application présentation correspondant au programme de l'application corps du remplacement de carte, ont été générées, par exemple, en utilisant le procédé pour la génération de fenêtres de dialogues visualisables sur l'écran d'un système informatique, et le dispositif pour mettre en oeuvre ce procédé enseigné par la demande de brevet français déposée au nom de BULL S.A. le 22 Juin 1988, sous le numéro 88.08381 correspondant au brevet EP-A-0 348 293.

La première étape consiste dans le lancement du service RPB, indiqué par la référence (900). Cette étape consiste d'abord à faire apparaître en fenêtre le service superviseur SPV pour venir sélectionner dans le menu des différents services le remplacement de carte RPB, et le lancer en cliquant sur son nom avec la souris. Une fois le service lancé, la première question que pose RPB est de lui fournir l'identifieur de l'emplacement physique où s'opère la manipulation. Ceci est indiqué par l'étape (901) sur l'organigramme. Cette étape se traduit dans le programme de présentation de remplacement de carte par l'apparition d'une fenêtre (9010, fig. 9) à l'intérieur de laquelle est représentée une boîte de dialogue (9011) comportant un premier ensemble (9012) constitué par une boîte de trois boutons radio, correspondant à chacun des types d'éléments susceptibles d'être remplacés. Le premier (9120) correspondant aux unités centrales de processeur IP, le deuxième (9121) correspondant aux unités mémoire HM, le troisième (9122) correspondant aux unités d'entrée-sortie IU. Cette boîte de dialogue comporte une boîte de listage (9013) qui, une fois que l'on a sélectionné un type d'éléments, par exemple le type des unités mémoire en venant cliquer le bouton radio se trouvant en vis-à-vis, fait apparaître dans la boîte de listage, la liste des différents éléments de l'unité de mémoire susceptibles d'être sélectionnés. Cette liste apparaît par un système de déroulement bien connu des utilisateurs de WINDOWS. Une fois le type d'unité, et l'identité de cette unité sélectionnée, on valide le choix en venant cliquer avec la souris un pavé de validation (9014).

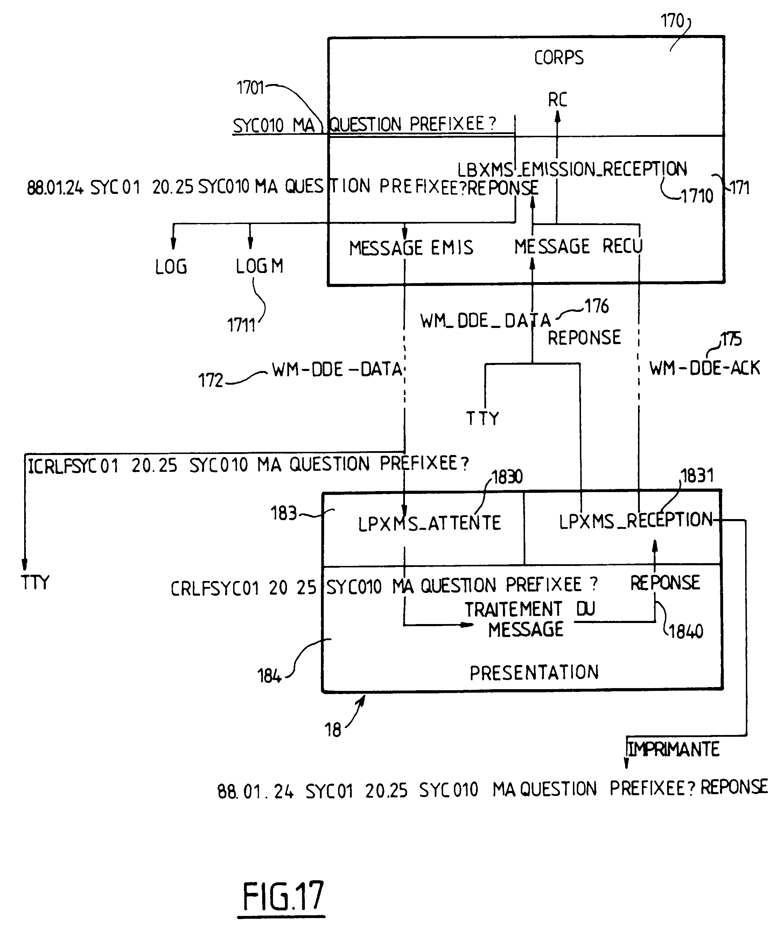

Après l'étape de détermination d'emplacement (901), le programme corps passe à l'étape de réquisition d'emplacement pour permettre la manipulation désirée. Si l'unité physique présente dans l'emplacement choisi est indisponible, le programme corps provoque dans le programme présentation l'affichage de cette information puis s'interrompt à l'étape (907). L'affichage de cette information d'indisponibilité se traduit entre le programme corps et la présentation par l'échange d'un message référencé "RPB 120" indiquant "l'emplacement requis contient une carte en ce moment". Ce message, traité par le programme présentation, provoque l'apparition de la fenêtre (9050, fig. 10) dans laquelle une boîte de dialogue (9051) contient un élément figuratif et la phrase du message, ainsi qu'un pavé de validation (9052) qui, après avoir été cliqué par la souris, permet d'accuser réception du message, comme représenté avec la figure 17.

Une deuxième boîte de dialogue dans cette fenêtre demande à l'opérateur s'il veut avorter cette action, ou la poursuivre. Cette deuxième boîte contient le pavé (9071) qui correspond à l'interruption de l'action et détourne le programme corps sur l'étape "fin" (911, fig. 8). Un deuxième pavé (9072, fig. 10) déclenche, par un message réponse envoyé au programme corps, la poursuite de la manipulation par l'étape de préparation de la manipulation (909, fig. 8) du programme corps.

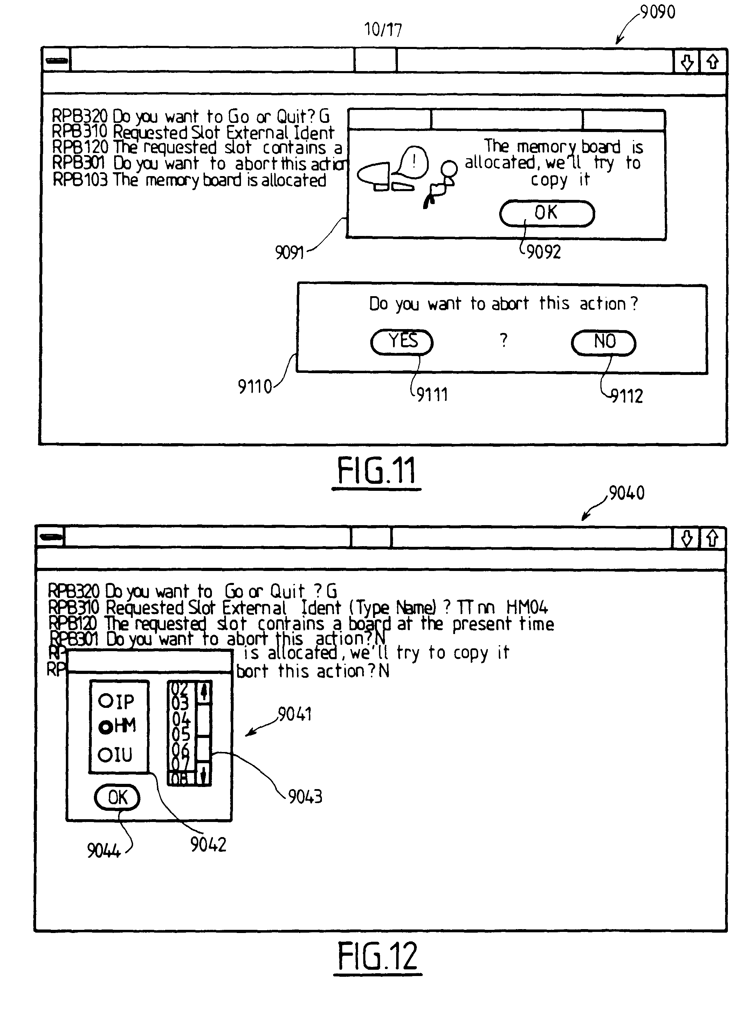

Si l'emplacement est libre, ou si l'unité qu'il contient n'est utilisée par aucun service ou système, le programme corps RPB informe la présentation du succès de la réquisition par un message et prépare la manipulation à l'étape (909) en indiquant à l'opérateur que le système essaye de copier la carte non utilisée. Ceci est représenté à la figure 11, par la fenêtre (9090) qui comporte une boîte de dialogue (9091), à l'intérieur de laquelle apparaît un message "la carte mémoire est attribuée, nous essayons de la copier", et un pavé de validation (9092). Cette fenêtre (9090) comporte également une deuxième boîte de dialogue (9110) dans laquelle un premier pavé permet d'interrompre l'action, comme représenté à l'étape (911) de la figure 9, et un deuxième pavé (9112) permet de poursuivre l'action en passant à l'étape (913) de l'organigramme de la figure 9.

L'étape de détermination de l'emplacement (901) peut éventuellemennt être suivie d'une étape de complément d'informations (904), par exemple dans le cas où l'on veut procéder à la recopie d'une carte mémoire, vers un emplacement de la carte destinée à la recopie. Cette étape déclenche dans le programme présentation, l'affichage de la fenêtre (9040) qui comporte une boîte de dialogue (9041) de constitution identique à la boîte de dialogue (9011).

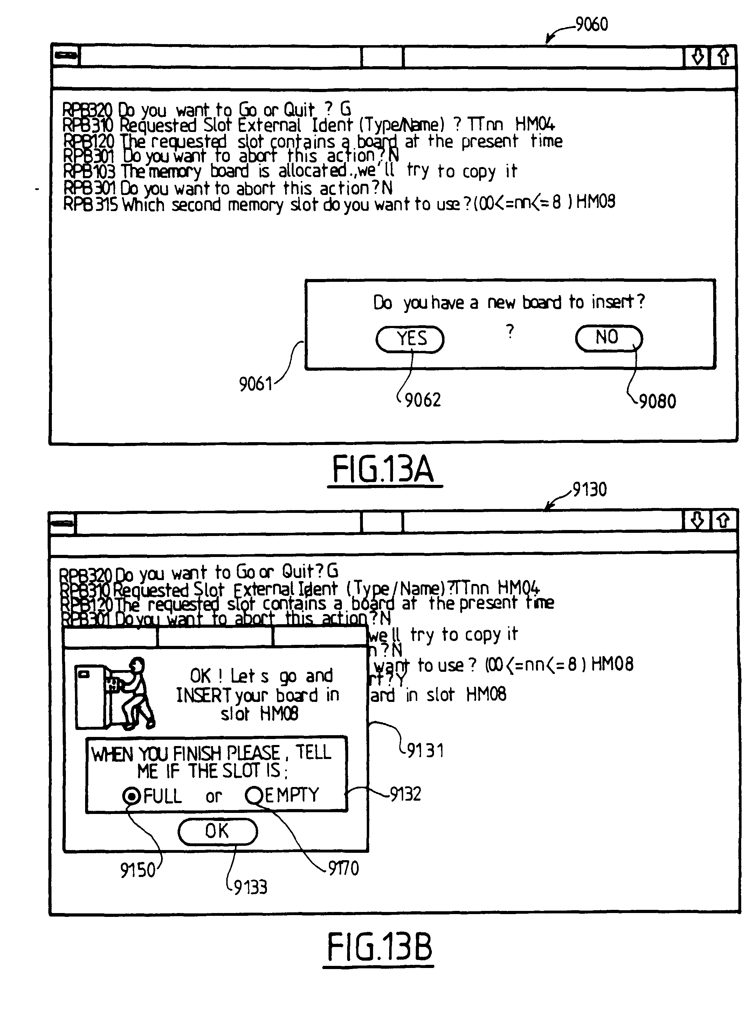

Dans l'exemple représenté, on va recopier les informations de l'unité mémoire (HM04) vers l'unité mémoire (HM08) dans laquelle on va insérer une carte mémoire. Cette étape (904) se poursuit par une étape dans laquelle on précise si l'opérateur compte utiliser une nouvelle carte, ou une carte en place pour la recopie. Ceci correspond aux étapes (906) ou (908) sur l'organigramme de la figure 8. Ces étapes déclenchent dans le programme de présentation, l'affichage d'une fenêtre (9060, fig. 13A) comportant une boîte de dialogue (9061) portant la question "Avez-vous une nouvelle carte à insérer ?", et un pavé de réponse "Oui" (9062) indiquant qu'il y a une nouvelle carte, et un pavé de réponse "Non" (9080) indiquant que l'on compte utiliser une carte existante. Les pavés sont, de façon connue, validés par la souris du processeur de service ou de la station éloignée utilisée pour faire tourner la présentation.

Si l'opérateur désire utiliser une carte de l'installation, ce qui en général est un cas exceptionnel, RPB vérifie que l'unité désignée est disponible, et dans l'affirmative la requiert par l'étape (912, fig. 8) qui sera explicitée plus loin. Dans le cas où l'opérateur souhaite utiliser une nouvelle carte, RPB s'assure que l'emplacement désigné est bien vide, et dans l'affirmative, le requiert au cours de l'étape (909) de préparation de la manipulation.

Une fois la manipulation préparée, le programme corps reçoit le feu vert de l'unité centrale, et indique à l'étape "action" (913) que la manipulation peut être effectuée. Cette étape "action" (913) déclenche, au niveau du programme de présentation PRPB, l'affichage de la fenêtre (9130, fig. 13B), laquelle comporte une boîte de dialogue (9131) incluant le message d'autorisation d'insertion de la carte dans l'emplacement défini, et incluant une deuxième boîte de dialogue (9132) demandant d'indiquer, une fois que l'opération est terminée, si l'emplacement est plein ou vide en validant respectivement l'un des deux boutons radio (9150) ou (9170). Ensuite, l'opération est validée en cliquant avec la souris, le pavé (9133).

Dans le cas où l'on effectue un ajout d'une carte, le programme corps se poursuit par l'étape (921) au cours de laquelle un test de la carte en place est effectué avant d'autoriser son insertion définitive dans l'installation. Ces tests seront effectués par le service "DGM" qui va être lancé automatiquement par RPB, et RPB se mettra en attente du résultat. Une fois le résultat du test transmis par DGM à RPB, le programme de présentation de remplacement de carte vous informe du résultat du test. Ceci est effectué par le message RPB (111) "Tout va bien, l'initialisation de la nouvelle carte est réussie" (All right, the new board init is successful). Dans ce cas, le service s'achève à l'étape (907). Dans le cas où la nouvelle carte est invalide, le programme corps RPB vous propose à l'étape (923) un nouvel échange de carte, et si vous l'acceptez, le programme repart à l'étape (909).

Dans le cas où l'on souhaitait procéder à un échange et à une recopie de carte mémoire à la fin de l'étape (913), le programme corps RPB nous renvoie sur l'étape (912) de test et d'initialisation. Dans ce cas, la carte mémoire destinée à la recopie ayant été introduite, le programme corps RPB va tenter de l'initialiser. Ceci est indiqué par le programme présentation RPB en affichant la fenêtre (9120) dans laquelle une boîte de dialogue (9121) affiche le message "Test en cours", ainsi qu'un pavé de validation (9122) permettant d'acquitter la réception du message envoyé par le programme corps RPB. Si la nouvelle carte est valide, RPB vérifie qu'elle est bien compatible avec la carte fautive dont elle est sensée prendre la place, et dans le cas affirmatif, RPB effectue la recopie et l'échange, et signale qu'il faut enlever l'ancienne carte dont il rappelle l'identifieur.

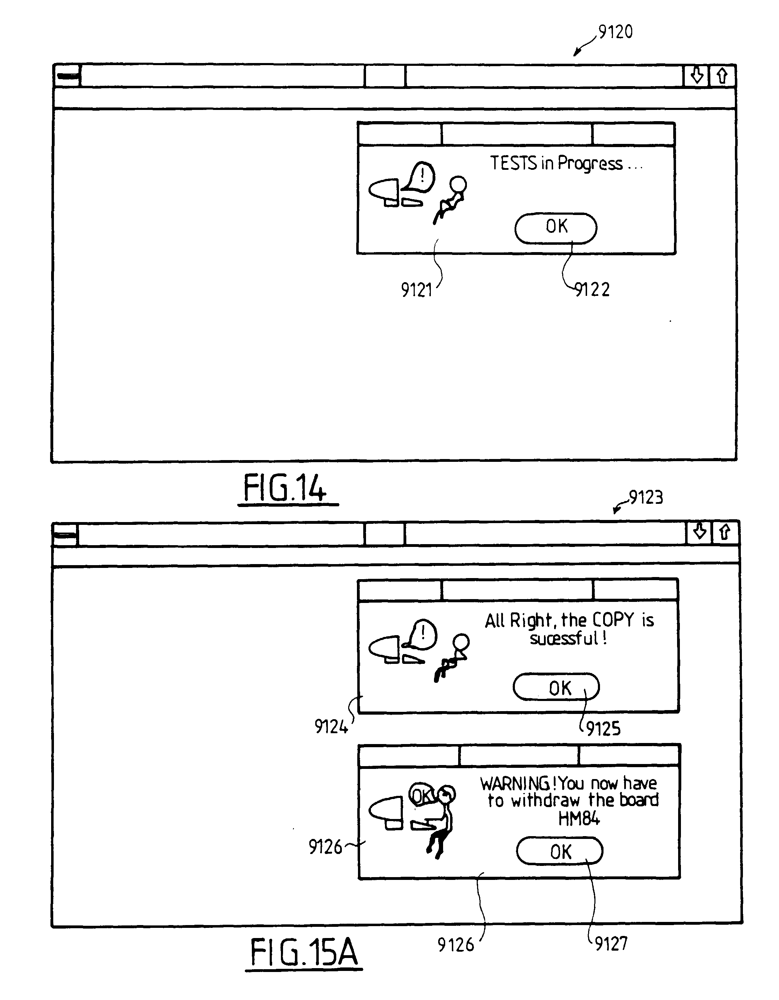

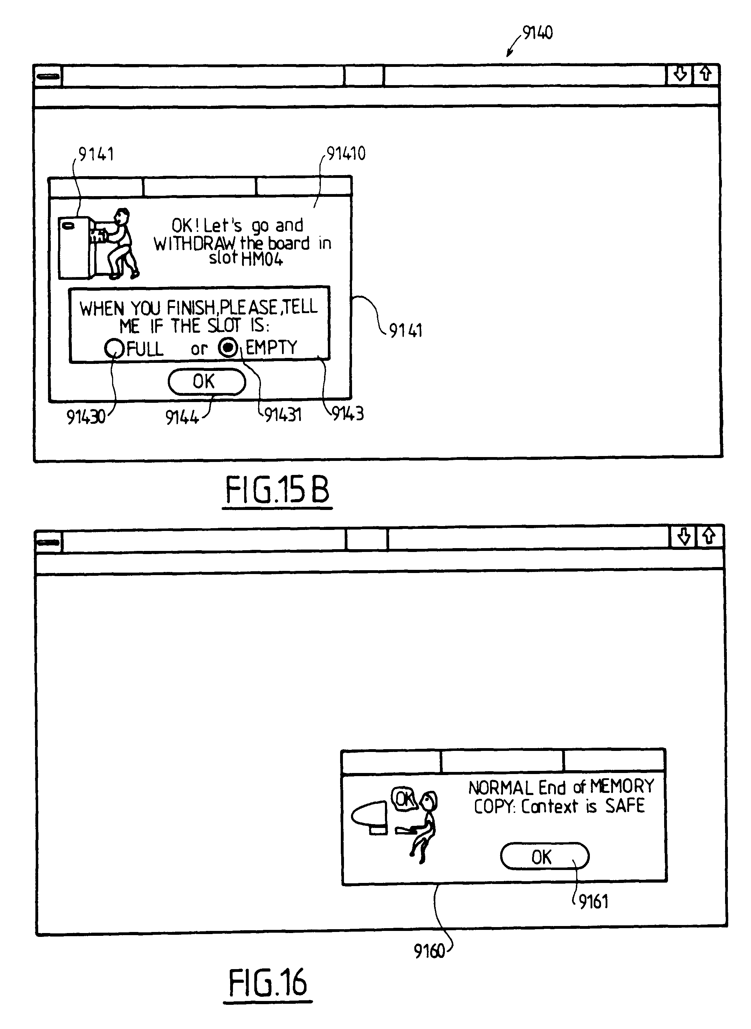

L'étape d'initialisation est représentée dans la fenêtre (9123, fig. 15.A) par la boîte de dialogue (9124), laquelle contient le message "Tout va bien, la copie est réussie", et un pavé de validation (9125) permettant d'acquitter la réception du message. Après cet affichage et la validation de ce message, le corps RPB envoie un second message informant l'opérateur qu'il peut maintenant retirer la carte. Ce message est affiché dans une boîte de dialogue (9126) et comporte également un pavé de validation (9127) permettant d'acquitter la réception dudit message. Dans le cas où la carte est incompatible, RPB signale qu'il faut la retirer et rappelle son identifieur.

Dans le cas où la carte après le test est jugée invalide, RPB vous propose d'effectuer un nouvel échange, et si vous acceptez cet échange proposé à l'étape (918), le programme vous renvoie à l'étape (909).

L'étape de retrait (914) fait apparaître la fenêtre (9140, fig. 15B), laquelle contient une boîte de dialogue (9141) incluant un dessin (9142) et un message (91410) indiquant qu'il faut retirer la carte située dans l'emplacement HM04. Cette boîte de dialogue comporte également une boîte de boutons radio (9143) demandant d'indiquer lorsque l'on a terminé l'opération et permettant par le bouton radio (91430) d'indiquer que l'emplacement est plein, et par le bouton radio (9431) d'indiquer que l'emplacement est vide, et que par conséquent, la carte a bien été retirée. Cette fenêtre de dialogue est validée par un pavé de validation (9144) permettant de valider les réponses cliquées par la souris.

Une fois le retrait effectué, le programme provoque, à l'étape (916) l'affichage du message représenté dans la boîte de dialogue (9160, fig. 16), indiquant que la copie a été effectuée normalement et qu'il n'y a pas de problème particulier. L'opérateur acquitte la réception du message en validant le pavé (9161).

On a ainsi décrit les différentes étapes du programme corps, ainsi que les affichages effectués par le programme présentation associé à ce programme corps dans une application particulière qui est le remplacement de cartes.

Les affichages de ce programme présentation étant développés à l'aide, par exemple, du procédé décrit dans la demande de brevet français intitulé "Procédé pour la génération de fenêtres de dialogue visualisables sur l'écran d'un système informatique", et les fenêtres ainsi générées, sont stockés dans une mémoire et appelées au fur et à mesure des besoins de l'affichage par les messages générés par le programme corps, comme on l'explique en relation avec les figures 17 à 19 ci-après.

La figure 17 représente les échanges entre le corps d'une application (170) et la présentation (184) de cette application, dans le cas d'un message ne nécessitant pas de réponse et pour une présentation mise en oeuvre sur la même entité. Le programme corps de l'application (170) se trouve lié (linked) à un module de bibliothèque d'échange de messages (171). Lorsqu'au cours du déroulement du programme corps (170), celui-ci arrive à une étape de message à émettre ou de question à émettre, représentée par la référence (1701), correspondant dans le cas représenté à une question à préfixe, le programme corps (170) fait appel dans le module de bibliothèque (171) à une primitive d'émission et de réception de message (1710), primitive (send/receive) d'émission/réception. Cette primitive stocke le message à émettre dans une mémoire tampon du processeur de service et émet un message DDE (Dynamic Data Exchange) d'échange dynamique de données (172). Au cours de cette opération, le programme d'échange XMS de messages écrit le message dans le fichier du disque dur LOGM (1711) qui contient le dialogue de tous les services (1711). Le message (172) d'échange dynamique de données, émis par le processeur de service dans lequel tourne le corps de l'application à destination du logiciel de présentation tournant sur le même processeur, contient l'adresse du bloc mémoire qui contient le message ou la question.

L'application de présentation et son module d'échange de messages (183) est en état d'attente, représenté par LPXMS_WAIT de l'étape (1830). L'application présentation (184) reçoit un message VM_DDE_DATA (172), puis cette application va lire le message à l'adresse indiquée. Une fois cette lecture effectuée, l'application traite le message en allant chercher dans le programme de présentation de l'application, les éléments permettant d'effectuer les affichages requis et de recevoir les réponses nécessitées par la question. Une fois la réponse fournie par l'opérateur de la console, cette réponse (1840) est délivrée à une primitive de réception (1831) (receiver) du module de bibliothèque d'échange de messages (183). Cette primitive permet d'envoyer un premier message dynamique (175) d'acquittement de la réception de la question, et après mise en forme de la réponse, d'envoyer un message (176) contenant l'adresse mémoire à laquelle la réponse a été stockée, pour permettre à la primitive (1710) d'effectuer le traitement de la réponse en allant lire la réponse contenue à l'adresse indiquée par le message (176).

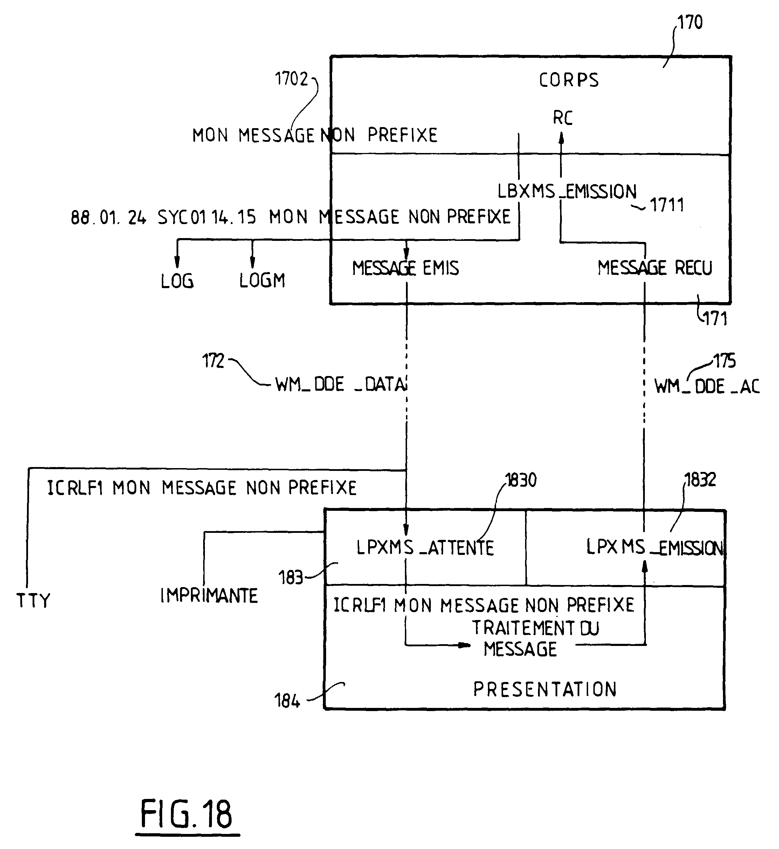

La figure 18 représente les échanges entre le corps d'une application (170) et la présentation (184) de cette application, dans le cas d'un message ne nécessitant pas de réponse et pour une présentation mise en oeuvre sur la même entité, tel que par exemple le processeur de service tenant. Dans cet exemple, le message (1801) fait appel à une primitive (1810) d'émission, qui après mise en forme et préparation du message avec les entêtes nécessaires, émet un message DDE (182) constitué par l'adresse à laquelle le message préparé est stocké. De façon similaire, le module d'échange de messages (183) rattaché à la présentation, lorsqu'il reçoit le message DDE, va lire le message à l'adresse indiquée et lance l'opération de traitement du message dans le programme de présentation. Cette opération de traitement du message consiste à aller chercher aux adresses adéquates, les données correspondant aux affichages à effectuer, de façon à permettre l'affichage d'une fenêtre telle que celle de la figure 14. Lorsque le traitement du message est effectué, le module présentation (184) active la primitive (1832) qui consiste à émettre un accusé de réception à l'attention du corps de l'application (180).

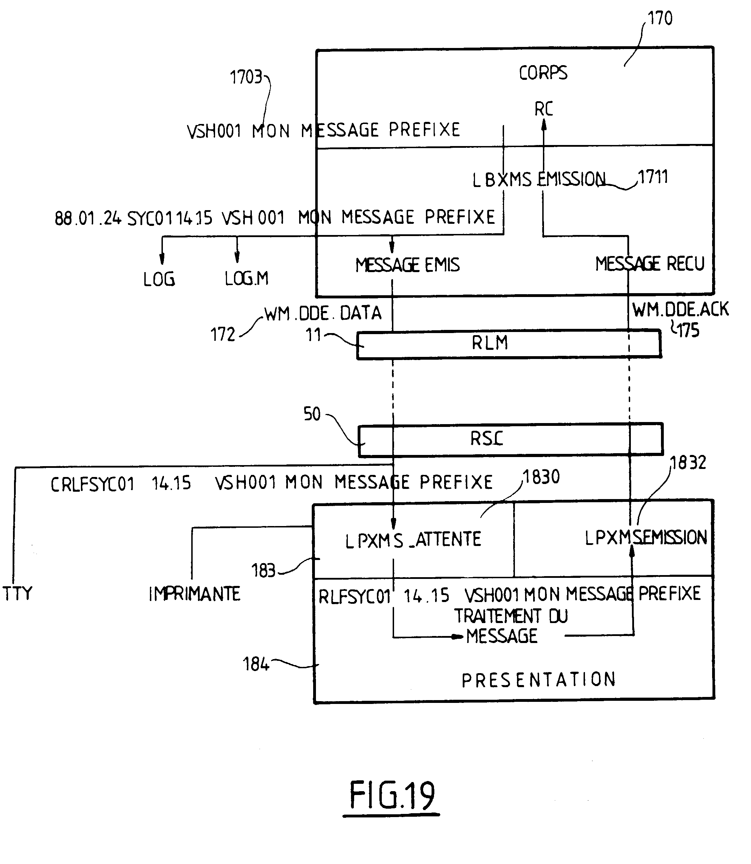

En ce qui concerne le fonctionnement de la figure 19, le principe de fonctionnement est le même que celui de la figure 18, à la seule différence que le message d'échange dynamique de données (192) est émis à l'attention du programme RLH qui gère les échanges entre l'application (170) qui est exécutée par le processeur de service et les lignes de télécommunication selon les protocoles de ces lignes. Ce programme RLH (11) interface avec un deuxième programme RSC (50) ou RMS (60) situé sur la console éloignée. Le programme RSC (50) avertit, dès réception d'un message par la ligne de télécommunication, l'application XMS (183) de traitement de message de la présentation qui se trouve en état d'attente, et transmet ce message à l'application de présentation (184). Ceci va déclencher le traitement du message, et en fin de traitement, provoquer l'activation de la primitive (1832) consistant à émettre un accusé de réception en direction du programme RSC, puis à travers les lignes de communication vers le programme de réception RLH (11), qui lui va transformer le message en message d'échange dynamique de données DDE (175) à l'attention du corps de l'application WINDOWS (170).

L'architecture ainsi réalisée permet non seulement de faire exécuter par un deuxième processeur de service ou par une station éloignée la présentation d'une application dont le programme corps est exécuté à distance par un premier processeur de service, mais également d'améliorer l'interface homme-machine.

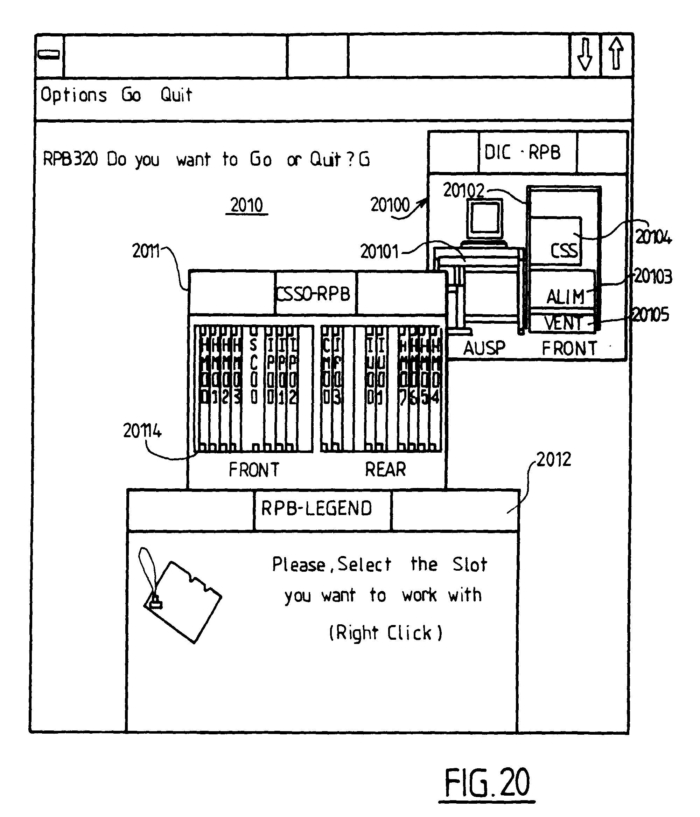

Dans une variante de réalisation du programme de présentation de remplacement de cartes RPB comporte une première étape, représentée figure 20, consistant a afficher dans une fenêtre (2010) une boîte (20100) faisant apparaître les différents éléments constitutifs du système : le processeur de service AUSP (20101), l'armoire du système (20102) contenant le sous système central (20104), le bloc d'alimentation (20103) et l'ensemble de ventilation (20103).

Selon l'élément sélectionné en cliquant un curseur amené en superposition sur l'élément à sélectionner, le programme de présentation fait apparaître une deuxième boîte (2011), présentant par exemple dans le cas de la sélection du sous système central (20104), l'ensemble des cartes (20114) disponibles sur la façade avant et l'ensemble des cartes (20115) disponibles sur la façade arrière de l'armoire.

La sélection de la représentation de l'une des cartes HM pour la mémoire, IP pour les unités centrales de processeur, IU pour les unités d'entrée sortie, indiquera la carte que l'on souhaite remplacer.

En même temps, le programme affiche une boîte de messages (2012) demandant de sélectionner l'emplacement dans lequel on veut remplacer la carte.

La figure 12 peut également être remplacée par une présentation du type de la figure 20, avec dans le boîte de message, un message demandant d'indiquer quel emplacement utiliser pour copier la mémoire.

D'autres modifications à la portée de l'homme de métier sont également possibles.

## Revendications

1. Dispositif permettant de piloter une application à distance, comportant un premier processeur de service relié par un réseau et une unité de maintenance des canaux (40) reliée à un système central (4), ledit processeur de service (1) étant relié par un commutateur de console de service (30), à une console de service de maintenance RMS (6), et à une console éloignée de service RSC (5), caractérisé en ce que le processeur de service et chaque console comportent en plus des programmes de système d'exploitation, un programme superviseur et au moins un service décomposé en deux applications, l'une "corps" composée de l'algorithme du programme, l'autre "présentation" comportant l'interface avec l'opérateur permettant un affichage du type à fenêtres avec une barre de menu, le programme corps de l'application comporte un module bibliothèque d'échange de messages (171) lié au programme corps de l'application et contenant des primitives destinées à émettre ou à recevoir des messages et le programme présentation de l'application comporte des fenêtres générées en fonction de l'application et stockées dans une mémoire, et un module bibliothèque d'échange de message de messages (183) lié au programme présentation de l'application et contenant des primitives destinées à recevoir ou à émettre des messages, les messages reçus par le module bibliothèque d'échange de message(183) lié au programme présentation contenant chacun l'adresse du bloc mémoire dans laquelle le message est stocké et les messages émis contenant chacun l'adresse du bloc mémoire du programme corps qui contient la commande correspondant à la réponse fournie par l'opérateur au message reçu, les messages émis par le module bibliothèque d'échange de message (173) lié au programme corps de l'application contenant chacun l'adresse du bloc mémoire qui contient le message, et les messages reçus contenant chacun l'adresse du bloc mémoire du programme corps dans laquelle la réponse fournie par l'opérateur est stockée.

2. Dispositif selon la revendication 1, caractérisé en ce qu'elle comprend un processeur de service de réserve (2), comportant des moyens de faire tourner l'application présentation correspondant à un service, et des moyens de communiquer avec le processeur de service tenant (1), comportant les moyens de faire tourner en même temps une application corps d'un programme, dont la présentation est faite sur le processeur de service de réserve (2), et l'application corps et la présentation d'un service dont la présentation est faite sur lui-même.

3. Dispositif selon la revendication 2, caractérisé en ce que chaque processeur de service ou console comporte un programme superviseur gérant les numéros d'instance des services et démarrant les services.

4. Dispositif selon la revendication 2, caractérisé en ce que chaque processeur de service (1, 2) comporte des moyens MSH (10, 20) de traitement des communications avec l'autre processeur de service (2, 1), par l'intermédiaire d'une unité de maintenance des canaux.

5. Dispositif selon la revendication 2, caractérisé en ce que chaque console comporte des moyens RSC, RMS (50, 60) de traitement des communications, par le commutateur de console (30) avec les moyens RLH (21, 11) de traitement des communications des processeurs de service (1, 2).

6. Dispositif selon la revendication 1 caractérisé en ce que le programme de présentation a été développé à partir d'un jeu de quatre composants constitués :
d'un élément noyau qui assure le traitement des tâches ,les allocations mémoires la fonction timer et les liens dynamiques;
d'un composant utilisateur qui assure le traitement des fenêtres et leur création;
d'un troisième composant pour réaliser les fonctions graphiques et les dessins;
d'un quatrième composant qui assure les fonctions de communications synchrones.

7. Procédé de remplacement de cartes dans une architecture permettant de piloter une application à distance, comportant un premier processeur de service relié par un réseau et une unité de maintenance des canaux (40) reliée à un système central (4), ledit processeur de service (1) étant relié par un commutateur de console de service (30), à une console de service de maintenance RMS (6), et à une console éloignée de service RSC (5), chaque processeur de service et chaque console comportant en plus des programmes de système d'exploitation, un programme superviseur et au moins un service décomposé en deux applications, l'une "corps" composée de l'algorithme du programme, l'autre "présentation" comportant l'interface avec l'opérateur permettant un affichage du type à fenêtres avec une barre de menu, le programme corps de l'application comportant un module bibliothèque d'échange de messages (171) lié au programme corps de l'application et contenant des primitives destinées à émettre ou à recevoir des messages et le programme présentation de l'application comportant des fenêtres générées en fonction de l'application et stockées dans une mémoire, et un module bibliothèque d'échange de messages (183) lié au programme présentation de l'application et contenant des primitives destinées à recevoir ou à émettre des messages, les messages reçus par le module bibliothèque d'échange de message(183) lié au programme présentation contenant chacun l'adresse du bloc mémoire dans laquelle le message est stocké et les messages émis contenant chacun l'adresse du bloc mémoire du programme corps qui contient la commande correspondant à la réponse fournie par l'opérateur au message reçu, les messages émis par le module bibliothèque d'échange de message (173) lié au programme corps de l'application contenant chacun l'adresse du bloc mémoire qui contient le message, et les messages reçus contenant chacun l'adresse du bloc mémoire du programme corps dans laquelle la réponse fournie par l'opérateur est stockée, le service de remplacement de cartes comportant une application de présentation consistant:
à afficher dans une boîte de dialogue l'identité d'un groupe d'éléments à sélectionner ;
à sélectionner l'identité du groupe d'éléments en validant par la souris ou le clavier l'identité ;
à sélectionner dans le groupe un des éléments en amenant une surbrillance sur cet élément ;
à valider les sélections en cliquant avec la souris le pavé contenant le message "OK".

8. Procédé selon la revendication 7, caractérisé en ce que l'application de présentation consiste en outre à afficher dans une boîte de dialogue un message indiquant que l'emplacement est occupé, que le système va essayer de copier son contenu, une question demandant la confirmation ou l'arrêt du service, et à sélectionner la confirmation ou l'arrêt du service en venant cliquer le pavé correspondant.

9. Procédé selon la revendication 8, caractérisé en ce qu'elle consiste à afficher dans une boîte de dialogue, le groupe d'éléments dans lequel on va sélectionner un deuxième élément en amenant une surbrillance sur cet élément, à valider la sélection en cliquant le pavé contenant le message "OK".

10. Procédé selon la revendication 9, caractérisé en ce que l'application de présentation consiste en outre à demander confirmation de la demande d'insertion d'une nouvelle carte;
à indiquer dans une boîte de dialogue que l'opérateur peut effectuer le changement, et après celui-ci, à demander la confirmation ou l'infirmation ;
à confirmer ou à infirmer le remplacement en venant cliquer un emplacement indiquant que le second emplacement est plein respectivement vide.

11. Procédé selon la revendication 10, caractérisé en ce que l'application de présentation consiste à afficher dans une boîte de dialogue l'exécution du test sur la carte mise en place ;
la réussite de la copie des informations contenues dans le premier élément ;
l'autorisation de retirer la carte du premier emplacement ;
à demander dans une deuxième boîte de dialogue à l'opérateur la confirmation ou l'infirmation du retrait, en venant cliquer une zone indiquant que le premier emplacement est vide, respectivement occupé.

12. Procédé d'utilisation sur un dispositif de traitement d'information comportant au moins un processeur exécutant l'algorithme d'un programme d'application et une console, caractérisé en ce que ledit programme d'application est divisé en deux applications, une première application appelée « corps » comportant l'algorithme du programme, l'autre appelée « présentation » comportant l'interface avec l'utilisateur, ladite interface permettant un affichage de type « window » avec une barre de menu ,le programme de présentation et le programme corps comportant chacun un module bibliothèque d'échange de message, le procédé comportant les étapes suivantes:
stockage du message envoyé par le programme corps dans une mémoire tampon de l'unité de traitement assignée au programme corps et envoi d'un message dynamique d'échange de données à destination du programme de présentation, ledit message dynamique d'échange de données contenant l'adresse du bloc mémoire qui contient le message envoyé par le programme corps;
réception du message dynamique d'échange de données par le programme présentation et lecture du message stocké à l'adresse indiquée dans le message dynamique d'échange de données;
traitement du message et affichage du message à l'utilisateur, la réception de la réponse étant traitée par une primitive du module de bibliothèque de message d'échange du programme présentation;
envoi au programme corps d'un message dynamique accusant la réception du message et envoi d'un second message contenant l'adresse à laquelle la réponse donnée par l'utilisateur a été stockée pour permettre aux primitives de transmission de message et de réception du programme corps d'effectuer le traitement de la réponse par lecture de la réponse contenue à l'adresse indiquée par le message.

13. Procédé d'utilisation sur un dispositif de traitement d'information comportant au moins un processeur exécutant l'algorithme d'un programme d'application et une console, caractérisé en ce que ledit programme d'application est divisé en deux applications, une première application appelée « corps » comportant l'algorithme du programme, l'autre appelée « présentation » comportant l'interface avec l'utilisateur ladite interface permettant un affichage de type « window » avec une barre de menu ,le programme de présentation et le programme corps comportant chacun un module bibliothèque d'échange de message( 171, 183), le procédé comportant les étapes suivantes:
stockage du message envoyé par le programme corps dans une mémoire tampon de l'unité de traitement assignée au programme corps et envoi d'un message dynamique d'échange de données au programme de présentation , ledit message dynamique d'échange de données contenant l'adresse du bloc mémoire qui contient le message envoyé par le programme corps;
réception du message dynamique d'échange de données par le programme présentation et lecture du message stocké à l'adresse indiquée dans le message dynamique d'échange de données;
traitement du message par utilisation des composants du dispositif permettant l'exécution de l'affichage demandé, en cherchant à l'adresse les données correspondant à l'affichage à effectuer;
activation après le traitement du message d'une primitive (1832) pour envoyer au corps de l'application un accusé de réception.

## Patentansprüche

1. Vorrichtung, die die Fernsteuerung einer Anwendung ermöglicht, mit einem ersten Dienstprozessor, der über ein Netz und eine mit einem Zentralsystem (4) verbundene Übertragungskanal-Wartungseinheit (40) angeschlossen ist, wobei der Dienstprozessor (1) über einen Dienstkonsolen-Umschalter (30) an eine Wartungsdienst-Konsole RMS (6) sowie an eine entfernte Dienstkonsole RSC (5) angeschlossen ist, dadurch gekennzeichnet, daß der Dienstprozessor und jede Konsole außerdem Betriebs system-Programme, ein Überwachungsprogramm und wenigstens einen Dienst enthalten, der in zwei Anwendungen zerlegt ist, wovon eine, der "Körper", aus dem Algorithmus des Programms aufgebaut ist, und die andere, die "Darstellung", die Schnittstelle mit der Bedienungsperson enthält, die eine Anzeige des Typs mit Fenstern mit einer Menüleiste ermöglicht, wobei das Körper-Programm der Anwendung einen mit dem Körper-Programm der Anwendung verbundenen Nachrichtenaustausch-Bibliotheksmodul (171) umfaßt, der Routinen enthält, die dazu vorgesehen sind, Nachrichten zu senden oder zu empfangen, und wobei das Darstellungs-Programm der Anwendung in Abhängigkeit von der Anwendung erzeugte und in einem Speicher gespeicherte Fenster sowie einen mit dem Darstellungs-Programm der Anwendung verbundenen Nachrichtenaustausch-Bibliotheksmodul (183) umfaßt, der Routinen enthält, die dazu vorgesehen sind, Nachrichten zu empfangen oder zu senden, wobei die von dem mit dem Darstellungs-Programm verbundenen Nachrichtenaustausch-Bibliotheksmodul (183) empfangenen Nachrichten jeweils die Adresse des Speicherblocks enthalten, in der die Nachricht gespeichert ist, und die gesendeten Nachrichten jeweils die Adresse des Speicherblocks des Körper-Programms enthalten, der den Befehl enthält, welcher der von der Bedienungsperson auf die empfangene Nachricht gelieferten Antwort entspricht, wobei die von dem mit dem Körper-Programm der Anwendung verbundenen Nachrichtenaustausch-Bibliotheksmodul (173) gesendeten Nachrichten jeweils die Adresse des Speicherblocks enthalten, der die Nachricht enthält, und die empfangenen Nachrichten jeweils die Adresse des Speicherblocks des Körper-Programms enthalten, in dem die von der Bedienungsperson gelieferte Antwort gespeichert ist.

2. Vorrichtung nach Anspruch 1, dadurch gekennzeichnet, daß sie einen Reservedienstprozessor (2) enthält, der Mittel zum Ablaufenlassen der einem Dienst entsprechenden Darstellungs-Anwendung sowie Mittel zum Kommunizieren mit dem Hauptdienstprozessor (1) umfaßt, der die Mittel zum gleichzeitigen Ablaufenlassen einer Körper-Anwendung eines Programms, dessen Darstellung auf dem Reservedienstprozessor (2) erfolgt, und der Körper-Anwendung und der Darstellung eines Diensts, dessen Darstellung auf ihm selbst erfolgt, enthält.

3. Vorrichtung nach Anspruch 2, dadurch gekennzeichnet, daß jeder Dienstprozessor oder jede Konsole ein Überwachungsprogramm enthält, das die Nummern der Anforderungen der Dienste enthält und die Dienste startet.

4. Vorrichtung nach Anspruch 2, dadurch gekennzeichnet, daß jeder Dienstprozessor (1, 2) Mittel MSH (10, 20) für die Verarbeitung von Kommunikationen mit dem anderen Dienstprozessor (2, 1) über eine Übertragungskanal-Wartungseinheit enthält.

5. Vorrichtung nach Anspruch 2, dadurch gekennzeichnet, daß jede Konsole Mittel RSC, RMS (50, 60) für die Verarbeitung von Kommunikationen über den Konsolen-Umschalter (30) mit den Mitteln RLH (21, 11) für die Verarbeitung von Kommunikationen der Dienstprozessoren (1, 2) enthält.

6. Vorrichtung nach Anspruch 1, dadurch gekennzeichnet, daß das Darstellungs-Programm ausgehend von einem Satz von vier erstellten Komponenten entwickelt worden ist:
aus einem Kernelement, das die Verarbeitung von Aufgaben, die Speicherzuweisungen, die Zeitgeberfunktion und die dynamischen Verknüpfungen sicherstellt;
aus einer Anwenderkomponente, die die Verarbeitung der Fenster und ihre Erzeugung sicherstellt;
aus einer dritten Komponente für die Verwirklichung der graphischen Funktionen und der Zeichnungen;
aus einer vierten Komponente, die die Funktionen synchroner Kommunikationen sicherstellt.

7. Verfahren zum Ersetzen von Karten in einer Architektur, die die Fernsteuerung einer Anwendung ermöglicht und versehen ist mit einem ersten Dienstprozessor, der über ein Netz und eine mit einem Zentralsystem (4) verbundene Übertragungskanal-Wartungseinheit angeschlossen ist, wobei der Dienstprozessor (1) über einen Dienstkonsolen-Umschalter (30) an eine Wartungsdienst-Konsole RMS (6) und an eine entfernte Dienstkonsole RSC (5) angeschlossen ist, wobei jeder Dienstprozessor und jede Konsole außerdem Betriebssystem-Programme, ein Überwachungsprogramm und wenigstens einen Dienst enthalten, der in zwei Anwendungen zerlegt ist, wovon eine, der "Körper", aus dem Algorithmus des Programms aufgebaut ist und die andere, die "Darstellung", die Schnittstelle mit der Bedienungsperson enthält, die eine Anzeige des Typs mit Fenstern mit einer Menüleiste ermöglicht, wobei das Körper-Programm der Anwendung einen mit dem Körper-Programm der Anwendung verbundenen Nachrichtenaustausch-Bibliotheksmodul (171) umfaßt, der Routinen enthält, die dazu vorgesehen sind, Nachrichten zu senden oder zu empfangen, und wobei das Darstellungs-Programm der Anwendung Fenster, die in Abhängigkeit der Anwendung erzeugt werden und in einem Speicher gespeichert sind, sowie einen mit dem Darstellungs-Programm der Anwendung verbundenen Nachrichtenaustausch-Bibliotheks-Modul (183) umfaßt, der Routinen enthält, die dazu vorgesehen sind, Nachrichten zu empfangen oder zu senden, wobei die von dem mit dem Darstellungs-Programm verbundenen Nachrichtenaustausch-Bibliotheksmodul (183) empfangenen Nachrichten jeweils die Adresse des Speicherblocks enthalten, in dem die Nachricht gespeichert ist, und die gesendeten Nachrichten jeweils die Adresse des Speicherblocks des Körper-Programms enthalten, der den Befehl enthält, der der von der Bedienungsperson auf die empfangene Nachricht gelieferten Antwort entspricht, wobei die von dem mit dem Körper-Programm der Anwendung verbundenen Nachrichtenaustausch-Bibliotheksmodul (173) gesendeten Nachrichten jeweils die Adresse des Speicherblocks enthalten, der die Nachricht enthält, und die empfangenen Nachrichten jeweils die Adresse des Speicherblocks des Körper-Programms enthalten, in der die von der Bedienungsperson gelieferte Antwort gespeichert ist, wobei der Dienst des Ersetzens von Karten eine Darstellungs-Anwendung enthält, die darin besteht:
in einem Dialogfeld die Identität einer Gruppe von zu wählenden Elementen anzuzeigen;
die Identität der Gruppe von Elementen auszuwählen, indem mit der Maus oder der Tastatur die Identität bestätigt wird;
in der Gruppe eines der Elemente auszuwählen, indem diesem Element eine erhöhte Helligkeit verliehen wird;
die Auswahl zu bestätigen, indem mit der Maus die die Nachricht "OK" enthaltende Taste angeklickt wird.

8. Verfahren nach Anspruch 7, dadurch gekennzeichnet, daß die Darstellungs-Anwendung außerdem darin besteht, in einem Dialogfeld eine Nachricht anzuzeigen, die angibt, daß die Position, deren Inhalt das System zu kopieren versucht, belegt ist, wobei eine Frage die Bestätigung oder das Anhalten des Diensts anfordert, und das Bestätigen oder das Anhalten des Diensts auszuwählen, indem die entsprechende Taste angeklickt wird.

9. Verfahren nach Anspruch 8, dadurch gekennzeichnet, daß es darin besteht, in einem Dialogfeld die Gruppe von Elementen anzuzeigen, in der ein zweites Element ausgewählt wird, indem diesem Element eine erhöhte Helligkeit verliehen wird, und die Auswahl zu bestätigen, indem die die Nachricht "OK" enthaltende Taste angeklickt wird.

10. Verfahren nach Anspruch 9, dadurch gekennzeichnet, daß die Darstellungs-Anwendung außerdem darin besteht, die Bestätigung der Anforderung des Einfügens einer neuen Karte anzufordern;
in einem Dialogfeld anzuzeigen, daß die Bedienungsperson den Wechsel vornehmen kann, und danach die Bestätigung oder die Aufhebung anzufordern;
die Ersetzung zu bestätigen oder aufzuheben, indem eine Position angeklickt wird, die anzeigt, daß die zweite Position voll bzw. leer ist.

11. Verfahren nach Anspruch 10, dadurch gekennzeichnet, daß die Darstellungs-Anwendung darin besteht, in einem Dialogfeld anzuzeigen, daß die Prüfung der eingesetzten Karte ausgeführt wird;
das Kopieren der im ersten Element enthaltenen Informationen erfolgreich war;
das Herausziehen der Karte aus der ersten Position zugelassen wird;
in einem zweiten Dialogfeld die Bedienungsperson aufzufordern, das Herausnehmen zu bestätigen oder aufzuheben, indem eine Zone angeklickt wird, die anzeigt, daß die erste Position leer bzw. belegt ist.

12. Anwendungsverfahren in einer Datenverarbeitungsvorrichtung mit wenigstens einem Prozessor, der den Algorithmus eines Anwendungsprogramms ausführt, und einer Konsole, dadurch gekennzeichnet, daß das Anwendungsprogramm in zwei Anwendungen unterteilt ist, eine erste sogenannte "Körper"-Anwendung, die den Algorithmus des Programms enthält, und eine weitere sogenannte "Darstellung", die die Schnittstelle mit dem Anwender enthält, wobei die Schnittstelle eine Anzeige des "Window"-Typs mit einer Menüleiste ermöglicht, wobei das Darstellungs-Programm und das Körper-Programm jeweils einen Nachrichtenaustausch-Bibliotheksmodul enthalten, wobei das Verfahren die folgenden Schritte enthält:
Speichern der vom Körper-Programm geschickten Nachricht in einem Pufferspeicher der Verarbeitungseinheit, der dem Körper-Programm zugewiesen ist, und Schicken einer dynamischen Datenaustausch-Nachricht zum Darstellungs-Programm, wobei die dynamische Datenaustausch-Nachricht die Adresse des Speicherblocks enthält, der die vom Körper-Programm geschickte Nachricht enthält;
Empfangen der dynamischen Datenaustausch-Nachricht vom Darstellungs-Programm und Lesen der Nachricht, die an der in der dynamischen Datenaustausch-Nachricht angegebenen Adresse gespeichert ist;
Verarbeiten der Nachricht und Anzeigen der Nachricht für den Anwender, wobei der Empfang der Antwort durch eine Routine des Nachrichtenaustausch-Bibliotheksmoduls des Darstellungs-Programms verarbeitet wird;
Schicken einer den Empfang der Nachricht bestätigenden dynamischen Nachricht zum Körper-Programm und Schicken einer zweiten Nachricht, die die Adresse enthält, an der die vom Anwender gegebene Antwort gespeichert worden ist, um den Routinen der Nachrichtenübertragung und des Empfangs des Körper-Programms zu ermöglichen, die Verarbeitung der Antwort durch Lesen der Antwort, die an der durch die Nachricht angezeigten Adresse enthalten ist, auszuführen.

13. Anwendungsverfahren in einer Datenverarbeitungsvorrichtung mit wenigstens einem Prozessor, der den Algorithmus eines Anwendungsprogramms ausführt, und einer Konsole, dadurch gekennzeichnet, daß das Anwendungsprogramm in zwei Anwendungen unterteilt ist, eine erste sogenannte "Körper"-Anwendung, die den Algorithmus des Programms enthält, während die andere sogenannte "Darstellung" die Schnittstelle mit dem Anwender enthält, wobei die Schnittstelle eine Anzeige des "Window"-Typs mit einer Menüleiste ermöglicht, wobei das Darstellungs-Programm und das Körper-Programm jeweils einen Nachrichtenaustausch-Bibliotheksmodul (171, 183) enthalten, wobei das Verfahren die folgenden Schritte enthält:
Speichern der vom Körper-Programm geschickten Nachricht in einem Pufferspeicher der Verarbeitungseinheit, der dem Körper-Programm zugewiesen ist, und Schicken einer dynamischen Datenaustausch-Nachricht zum Darstellungs-Programm, wobei die dynamische Datenaustausch-Nachricht die Adresse des Speicherblocks enthält, der die vom Körper-Programm geschickte Nachricht enthält;
Empfangen der dynamischen Datenaustausch-Nachricht durch das Darstellungs-Programm und Lesen der Nachricht, die an der in der dynamischen Datenaustausch-Nachricht angegebenen Adresse gespeichert ist;
Verarbeiten der Nachricht durch Verwenden der Komponenten der Vorrichtung, die die Ausführung der geforderten Anzeige ermöglichen, indem an der Adresse die der auszuführenden Anzeige entsprechenden Daten gesucht werden;
Aktivieren einer Routine (1832) nach der Verarbeitung der Nachricht, um zum Körper der Anwendung eine Empfangsbestätigung zu schicken.

## Claims

1. A device allowing an application to be controlled remotely, comprising a first service processor connected by a network and a channel maintenance unit (40) connected to a central system (4), said service processor (1) being connected by a service console switch (30) to an RMS maintenance service console (6) and to an RSC remote service console (5), characterised in that the service processor and each console further contain operating system programs, a supervisory program and at least one service broken down into two applications, one being the "body" composed of the algorithm of the program, the other being the "presentation" comprising the interface with the operator permitting a windows-type display with a menu bar, the body program of the application comprises a message-interchange library module (171) linked to the body program of the application and containing primitives intended to transmit or receive messages and the presentation program of the application comprises windows generated as a function of the application and stored in a memory, and a message-interchange library module of messages (183), linked to the presentation program of the application and containing primitives intended to receive or transmit messages, the messages received by the message-interchange library module (183) linked to the presentation program each containing the address of the memory block in which the message is stored and the messages transmitted each containing the address of the memory block of the body program which contains the command corresponding to the response supplied by the operator to the message received, the messages transmitted by the message-interchange library module (173) linked to the body program of the application each containing the address of the memory block which contains the message, and the messages received each containing the address of the memory block of the body program in which the response supplied by the operator is stored.

2. A device according to Claim 1, characterised in that it comprises a reserve service processor (2) containing means for running the presentation application corresponding to a service, and means of communicating with the current service processor (1), containing means for running simultaneously a body application of a program, the presentation of which is made on the reserve service processor (2), and the body application and the presentation of a service, the presentation of which is made on itself.

3. A device according to Claim 2, characterised in that each service processor or console contains a supervisory program managing the tag numbers of the services and starting up the services.

4. A device according to Claim 2, characterised in that each service processor (1,2) contains MSH means (10, 20) for processing communications with the other service processor (2,1) via a channel maintenance unit.

5. A device according to Claim 2, characterised in that each console contains RSC, RMS means (50, 60) for processing communications, via the console switch (30) with the RLH means (21, 11) for processing communications from the service processors (1, 2).

6. A device according to Claim 1 characterised in that the presentation program has been developed on the basis of a set of four components constituted by:
- a core element which assures the processing of the tasks, the memory allocations, the timer function and the dynamic links;
- a user component which assures the processing of the windows and their creation;
- a third component to carry out the graphical functions and the drawings;
- a fourth component which assures the functions of synchronous communications.

7. A process for replacing boards in an architecture allowing an application to be controlled remotely, containing a first service processor connected by a network and a channel maintenance unit (40) connected to a central system (4), said service processor (1) being connected by a service console switch (30) to an RMS maintenance service console (6) and to an RSC remote service console (5), each service processor and each console further containing operating system programs, a supervisory program and at least one service broken down into two applications, one being the "body" composed of the algorithm of the program, the other being the "presentation" comprising the interface with the operator allowing a windows-type display with a menu bar, the body program of the application comprising a message-interchange library module (171) linked to the body program of the application and containing primitives intended to transmit or receive messages and the presentation program of the application comprising windows generated as a function of the application and stored in a memory, and a message-interchange library module (183) linked to the presentation program of the application and containing primitives intended to receive or transmit messages, the messages received by the message-interchange library module (183) linked to the presentation program each containing the address of the memory block in which the message is stored and the messages transmitted each containing the address of the memory block of the body program which contains the command corresponding to the response supplied by the operator to the message received, the messages transmitted by the message-interchange library module (173) linked to the body program of the application each containing the address of the memory block which contains the message, and the messages received each containing the address of the memory block of the body program in which the response supplied by the operator is stored, the board replacement service comprising a presentation application consisting in:
- displaying in a dialogue box the identity of a group of elements to be selected;
- selecting the identity of the group of elements by validating the identity using the mouse or keyboard;
- selecting one of the elements from the group by highlighting that element;
- validating the selections by clicking with the mouse the button containing the message "OK".

8. A process according to Claim 7, characterised in that the presentation application further consists in displaying in a dialogue box a message indicating that the slot is occupied, that the system will try to copy its content, a question asking for the service to be confirmed or stopped, and in selecting confirmation or stopping of the service by clicking the corresponding button.

9. A process according to Claim 8, characterised in that it consists in displaying in a dialogue box the group of elements from which a second element is to be selected by highlighting that element, in validating the selection by clicking the button containing the message "OK".

10. A process according to Claim 9, characterised in that the presentation application further consists in
- asking for confirmation of the request to insert a new board;
- indicating in a dialogue box that the operator can make the change, and after that, asking for confirmation or nullification;
- confirming or nullifying the replacement by clicking a location indicating that the second slot is full or empty respectively.

11. A process according to Claim 10, characterised in that the presentation application consists in displaying in a dialogue box
- the execution of the test on the board in place;
- the result of the copy of the information contained in the first element;
- the authorisation to withdraw the board from the first slot;
in asking in a second dialogue box the operator to confirm or nullify the removal, by clicking in the area indicating that the first slot is empty or occupied respectively.

12. A process of use on an information processing device comprising at least one processor executing the algorithm of an application program and a console, characterised in that said application program is divided into two applications, a first application called the "body" containing the algorithm of the program, and the other called the "presentation" containing the user interface, said interface permitting a "window" type display with a menu bar, the presentation program and the body program each containing a message-interchange library module, the process comprising the following steps:
- storage of the message sent by the body program to a buffer memory of the processing unit assigned to the body program and the sending of a dynamic data-interchange message to the destination of the presentation program, said dynamic data-interchange message containing the address of the memory block containing the message sent by the body program;
- reception of the dynamic data-interchange message by the presentation program and reading of the message stored at the address indicated in the dynamic data-interchange message;
- processing of the message and display of the message to the user, the reception of the response being processed by a primitive of the message-interchange library module of the presentation program;
- sending to the body program a dynamic message acknowledging the reception of the message and sending a second message containing the address at which the response given by the user has been stored in order to allow the primitives for message transmission and reception of the body program to effect the processing of the response by reading the response contained at the address indicated by the message.

13. A process of use on an information processing device comprising at least one processor executing the algorithm of an application program and a console, characterised in that said application program is divided into two applications, a first application called the "body" containing the algorithm of the program, the other one called the "presentation" containing the user interface, said interface allowing a "window" type display with a menu bar, the presentation program and the body program each containing a message-interchange library module (171, 183), the process comprising the following steps:
- storage of the message sent by the body program to a buffer memory of the processing unit assigned to the body program and the sending of a dynamic data-interchange message to the presentation program, said dynamic data-interchange message containing the address of the memory block which contains the message sent by the body program;
- reception of the dynamic data-interchange message by the presentation program and reading of the message stored at the address indicated in the dynamic data-interchange message;
- processing of the message by using the components of the device allowing the execution of the requested display, by searching at the address for the data corresponding to the display to be effected;
- activation, after the processing of the message, of a primitive (1832) to send to the body of the application an acknowledgment of reception.
